# EUROPÄISCHE PATENTSCHRIFT

(11) **EP 1 293 717 B1**
(45) Veröffentlichungstag und Bekanntmachung des Hinweises auf die Patenterteilung: **27.09.2006**
(21) Anmeldenummer: 02020030.9
(22) Anmeldetag: 06.09.2002
(51) Int. Cl.: F16L 47/00

(54) **Rohrleitungsverbindung mit Schrumpfmuffe**
Pipe coupling with shrinkable sleeve
Raccord de conduits avec manchon rétractable

(30) Priorität: 08.09.2001 DE 10144277
(43) Veröffentlichungstag der Anmeldung: 19.03.2003
(73) Patentinhaber: Airbus Deutschland GmbH, 21129 Hamburg (DE)
(72) Erfinder: Kornrumpf, Manfred, Dipl.-Ing., 21614 Buxtehude (DE)
(74) Vertreter: Hansmann, Dierk

(56) Entgegenhaltungen:
- EP-A- 0 102 919
- DE-A- 2 352 457
- GB-A- 1 327 441
- US-A- 4 709 948
- "SHAPED MEMORY CONNECTOR" RESEARCH DISCLOSURE, KENNETH MASON PUBLICATIONS, HAMPSHIRE, GB, Nr. 334, 1. Februar 1992 (1992-02-01), Seite 151 XP000291260 ISSN: 0374-4353
- "MEMORY METAL COUPLINGS" NTIS TECH NOTES, US DEPARTMENT OF COMMERCE. SPRINGFIELD, VA, US, 1. Mai 1990 (1990-05-01), Seiten 435,1-2, XP000137401 ISSN: 0889-8464

## Beschreibung

Die Erfindung bezieht sich auf ein Rohrleitungssystem für Klimaanlagen von Flugzeugen mit Verbindungselementen zur Schrumpfschlauch-Verbindung von Rohrleitungsenden zugeordneter Rohrleitungen.

Es besteht bei erforderlichen Rohrleitungsverbindungen für Metall- oder Kunststoffrohre dieser Art die Schwierigkeit, relativ große Durchmesser von Leitungsenden problemlos und sicher zu verbinden und dabei auch unter Alterungserscheinungen die Dichtheit zu gewährleisten. Üblicherweise werden derartige Verbindungselemente in starrer oder flexibler Ausbildung durch Schellen festgelegt, die entsprechend genau angepaßt sein müssen und somit zu bevorraten sind sowie diese verbindungs- und Befestigungselemente ein relativ hohes, unerwünschtes Gewicht aufweisen. Ferner wird die Vibration während des Flugbetriebes durch die Verbindungs- und Befestigungselemente übertragen und belastet zusätzlich die Verbindung.

Nach der EP-A-0102919 sind bereits starre Rohrverbindungen bekannt, die durch aufsetzbare separate Muffen gebildet sind. Hierzu werden als Materialien Kunststoffe für die Muffen eingesetzt, die durch Erwärmung an die Rohrdurchmesser als starre Verbindungen angepaßt werden.

Ferner ist nach der US-A-4709 948 ebenfalls eine Muffe zur starren Verbindung auf die zu verbindenden Rohrenden aufgesetzt und durch eine Umhüllung auf den Rohren festgelegt.

Aus der US-A-4 578 855 ist eine Anordnung mit einem flexiblen Spiralschlauch bekannt, der mit einem starren Lufteinlaß verbunden ist. Hierbei wird die Verbindung zwischen starrem Lufteinlaß und flexiblem Spiralschlauch über einen Schrumpfschlauch hergestellt. Hierbei werden keine starren Elemente mit einem Schrumpfschlauch zur Herstellung der Flexibilität verbunden und auch die Anpassung an Abweichungen von Rohrenden und die Weiterleitung von Vibrationen ist nicht zu lösen.

Die Aufgabe der Erfindung ist es, für ein gattungsgemäßes Rohrleitungssystem eine einfache Shrumpfschlauchverbindung zwischen zwei Rohrenden zu schaffen, die Abweichungen der zu verbindenden Abschnitte überbrückt und eine Übertragung von Vibrationen im Flugbetrieb durch eine Überbrückung der Rohrenden ausschließbar ist.

Die Lösung dieser Aufgabe erfolgt durch die Merkmalskombination des Anspruches.

Die Erfindung ist in einem Ausführungsbeispiel anhand der beigefügten Zeichnungen näher erläutert. Es zeigen :
- Fig.1: eine herkömmliche Rohrverbindung mit einer weichen Muffe,
- Fig. 2: eine herkömmliche Rohrverbindung mit einer harten Muffe,
wobei diese Art Rohrverbindung mit den eingangs erwähnten Nachteilen der Fachwelt bekannt sind,
- Fig. 3: eine Rohrverbindung mit einem Schrumpfschlauch.

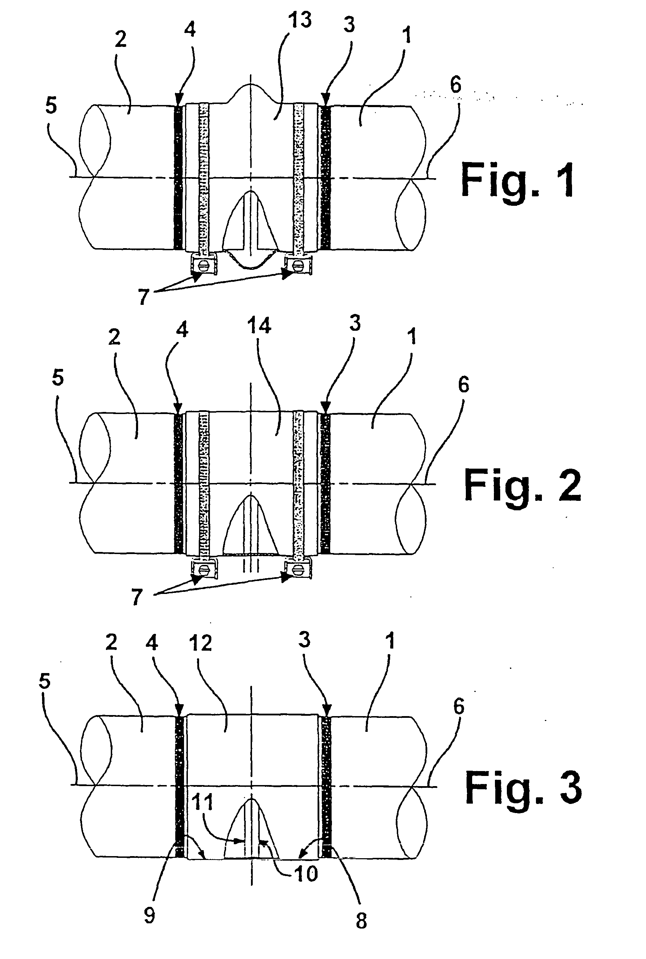

Zurückkommend auf die Fig. 1 wird dort die Anordnung von zwei Rohren 1, 2 vorgestellt, die dermaßen ausgerichtet sind, dass sich die Rohrachsen 5, 6 der beiden Rohre 1, 2 auf gleichem Niveau befinden. Dabei bietet der identische Verlauf der beiden Rohrachsen 5, 6 eine Gewähr dafür, dass mit der nach der Ausrichtung vorgenommenen Verbindung der beiden Rohre 1, 2 mit der weichen Muffe 13 aus einem gummiartigen Material eine hinreichende dichte Befestigung auf dem rohrendseitigen Anschlussbereich des betreffenden Rohres 1, 2 umgesetzt wird, die den Qualitätsansprüchen im Flugzeugbau genügt. Damit sich die Rohrverbindung durch einwirkende Vibrationen oder sonstige mechanische Beeinträchtigungen, denen sie im Flugzeugbetrieb ausgesetzt wird, nicht selbstständig mechanisch löst, wird auf den sichtbaren Außenmantel der Muffe und umfänglich derer wenigstens eine Stahlschelle 7 befestigt. Diese Stahlschelle 7, die man gewöhnlich zur Einzel-Befestigung von Verbindungen auf Überdruckrohren verwendet, drückt diese Muffe 13 gegen den rohrendseitig gelegenen Anschlussbereich 8, 9 des betreffenden Rohres 1, 2, der durch eine rohrumfängliche Markierung 3, 4, die dem betreffenden Rohrleitungsende 10, 11 definitiv beabstandet ist, begrenzt ist. Sofern eine weiche Muffe 13 zwei Unterdruckrohre miteinander verbinden wird, wird eine Doppelbefestigung von Verbindungen auf dem betreffenden Anschlussbereich 8, 9 mit zwei Stahlschellen 7 vorgenommen.

Wegen der beabsichtigten kraftschlüssigen Verbindung zweier seriell angeordneter Rohre 1, 2 nach der Fig. 2 wird oftmals auch eine harte Muffe 14 als Rohrverbindungselement für diese (identisch der Fig. 1) angeordneten Rohre 1, 2 herkömmlich verwendet. Diese Verbindungstechnologie gleicht derjenigen, welche vorher hinsichtlich der Fig. 1 mit einer (nicht doppelt ausgeführten) Stahlschellenbefestigung vorgestellt wird, weswegen sich weitere Angaben erübrigen.

In der Fig. 3 wird eine Rohrverbindung mit einem Schrumpfschlauch 12 vorgestellt. Auch hier besteht die Absicht, zwei seriell angeordnete Rohre 1, 2 mit einem Rohrverbindungselement miteinander zu verbinden. Diese Rohre 1, 2 sind häufig integraler Bestandteil eines Rohrleitunessystems zur Klimatisierung eines Flugzeuges oder Einrichtungen (bspw. Klimaanlage oder Kühlgeräte) davon, welche an oder beabstandet der (nicht gezeigten) Flugzeugstruktur befestigt sind. Da es nicht selten vorkommt, dass es gilt, abgewinkelte Rohrendbereiche miteinander zu verbinden, besteht auch hier aus Qualitäts- und Sicherheitsgründen der Anspruch, dass (zunächst allgemein) die Rohrachsen 5, 6 der seriell angeordneten Rohre 1, 2 [nach Fig. 3] und (im besonderen) die Rohrachsen 5, 6 von (nicht näher betrachteten) abgewinkelten Rohrleitungsendbereichen zweier Rohre innerhalb einem Anschlussbereich 8, 9 identisch gelagert sind.

Unter Praxisbedingungen wird der Parallel- und Winkelversatz der Rohre 1, 2 den seriellen Toleranzen entsprechen. Dabei befindet sich dieser Anschlussbereich 8, 9 von einem ersten Rohr 1 und einem zweiten Rohr 2 jeweils zwischen einer rohrumfänglichen Markierung 3, 4 und einem Rohrleitungsende 10, 11 auf der Außenwandung des betreffenden Rohres 1, 2. Ferner ist über die sich gegenüberstehenden Rohrleitungsenden 10, 11 des ersten und des zweiten Rohres 1, 2 ein Schrumpfschlauch 12 gelegt. Dabei umhüllt das betreffende Schrumpfschlauchende des Schrumpfschlauches 12 jeweils den rohrendseitig gelegenen Anschlussbereich 8, 9 der beiden Rohrleitungsenden 10, 11, der dem außenliegenden Wandungsbereich der Rohre 1, 2 abgegrenzt ist, und liegt diesem (zunächst) unbefestigt auf. Ein mechanisch fester Anschluß dieser Schrumpfschlauchenden und eine druckdicht standhafte Schrumpfschlauchverbindung mit jenen beiden Rohrendbereichen wird mittels geeigneter Vorrichtungen durch ein Aufschrumpfen der Schrumpfschlauchenden auf genanntem Anschlussbereich realisiert. Der Form- und Lagenversatz des Schrumpfschlauches 12 wird sich nach geschehener Aufschrumpfung in tolerierbaren Grenzen halten.

Um eine sichere und druckdichte Befestigung des geschrumpften Schrumpfschlauches 12 auf den Rohrenden der beiden Rohre 1, 2 zu gewährleisten, sind folgende Maßnahmen in der angegeben Reihenfolge abzuarbeiten: Demnach wird
a) zunächst die Schrumpfrate bestimmt,
b) dann der Urdurchmesser des Schrumpfschlauches 12 zum Enddurchmesser der Rohrleitungsenden 10, 11 festgelegt,
c) abschließend der dermaßen vorbereitete Schrumpfschlauch 12 endseitig dem betreffenden Rohrleitungsendabschnitt (Anschlussbereich 8, 9) des ersten und des zweiten Rohres 1, 2 über einen Aufschrumpf-Zeitraum unter Wärmebeaufschlagung auf diese Bereiche letzteren aufgeschrumpft, so dass nach geschehener Aufschrumpfung das betreffende Schrumpfschlauchende den betreffenden Rohrleitungsendabschnitt fest (sicher) und druckdicht umschließt,
d) nachfolgend der Maßnahme b) die Schrumpfschlauchinnenseite aufgeraut, um bezüglich der Adhäsion des Schrumpfschlauches 12 höhere Anhangskraftwerte (höhere Druckdichte) zu erzielen,
e) anschließend der Maßnahme d) die Schrumpfschlauchinnenseite mit einem Kunststoffkleber, beispielsweise mit einem von der Firma Forbo-Helmitin GmbH unter dem Produktnamen: "Helmitin 35050" angebotenen Kunststoffkleber, versehen, um gleichfalls oder zusätzlich bezüglich der Adhäsion des Schrumpfschlauches 12 höhere Anhangskraftwerte (höhere Druckdichte) zu erzielen.

Abschließend wird ergänzt, dass die beispielgemäße Anordnung einen Schrumpfschlauch 12 berücksichtigt, der sich durch folgende Eigenschaften auszeichnen wird:

| | |
|---|---|
| maximale Schrumpftemperatur | +125°C für 1-2min, bzw, 135°C für 30sec. (kurzzeitig); |
| einen Temperaturbereich: | -40°C bis +95°C; |
| einen max. Betriebsdruck: | -30mbar bis +30 mbar; |
| einen Proof Pressure | +45 mbar; |
| einen Burst Pressure | +90 mbar; |
| Lebensdauer: | 60.000 FH (Flugstunden); |
| Brand, Rauch, Toxic | gemäß nationalen und internationalen Bestimmungen für die Luftfahrt; |
| Allgem. Anforderungen | gemäß nationalen und internationalen Bestimmungen für die Luftfahrt. |

Erfüllt der Schrumpfschlauch 12 qualitativ diese Materialanforderungen und werden diese Parameter bei der Realisierung beachtet, dann werden qualitativ ausreichende Rohrleitungs-Schrumpfschlauchverbindungen realisiert, die eine sichere und druckdichte Befestigung des Schrumpfschlauches 12 auf den Rohrenden von seriell zu verbindenden Rohren 1, 2 zu einer Rohrleitungsverbindung gewährleisten.

Als Schrumpfschlauchmaterial wird die Verwendung von E-Glasfiber, Hart-PVC, Weich-PVC, Polyolefin, PVDF, Elastomer, PTFE, FEP, MFA, PFA, PTFE-FEP, Silikon, LD-PE, Polyurethan, PEEK, PVDF, ETFE vorgeschlagen.

## Patentansprüche

1. Rohrleitungssystem für Klimaanlagen von Flugzeugen mit Verbindungselementen zur Schrumpfschlauchverbindung von Rohrleitungsenden (10, 11) zugeordneter Rohrleitungen (1, 2), die an bzw. beabstandet von einer Flugzeugstruktur befestigt sind und jedes Verbindungselement zur Umhüllung der zu verbindenden Rohrleitungsenden (10, 11) durch einen Schrumpfschlauch (12) gebildet ist, der auf durch Markierungen (3, 4) bestimmte Anschlußbereiche (8, 9) der Rohrleitungen (1, 2) unter Beabstandung der Rohrleitungsenden (10, 11) aufsetzbar und aufschrumpfbar ist, wobei die Innenwandung des Schrumpfschlauches (12) im Auflagebereich der Rohrleitungsenden (10, 11) aufgerauht und endseitig mit einem Kleber versehen ist.

## Claims

1. Pipeline system for air conditioning systems of aircraft with connecting elements to provide a shrink-fit sleeve connection for pipe ends (10, 11) of co-operating pipes (1, 2), which are secured to or at a distance apart from an aircraft structure, and every connecting element is provided in the form of a shrink-fit sleeve (12) for enclosing the pipe ends (10, 11) to be connected, which can be positioned by means of markings (3, 4) on specific connecting regions (8, 9) of the pipes (1, 2) and shrunk whilst keeping the pipe ends (10, 11) spaced at a distance apart, the internal wall of the shrink-fit sleeve (12) being roughened in the contact region of the pipe ends (10, 11) and provided with an adhesive at the terminal end.

## Revendications

1. Système de tuyauterie pour des installations de climatisation d'aéronefs comportant des éléments de raccordement pour le raccordement par manchons souples contractibles des extrémités (10, 11) de conduits (1, 2) associés qui sont fixés contre une structure d'aéronef ou de manière écartée de celle-ci, chaque élément de raccordement qui enveloppe les extrémités de conduits (10, 11) étant formé d'un manchon rétractable (12) qui peut être enfilé sur des portions de raccordement (8, 9) des conduits (1, 2) délimitées par des repères (3, 4) en respectant un écartement mutuel des extrémités de conduit (10, 11) puis contracté, la paroi intérieure du manchon rétractable (12) présentant une certaine rugosité dans la région de contact avec les extrémités de conduits (10, 11) et étant pourvue d'un adhésif côté extrémité.
